# EUROPÄISCHE PATENTSCHRIFT

(11) **EP 2 539 094 B1**
(45) Veröffentlichungstag und Bekanntmachung des Hinweises auf die Patenterteilung: **17.06.2020**
(21) Anmeldenummer: 11703201.1
(22) Anmeldetag: 07.02.2011
(51) Int. Cl.: B23B 31/107, B25B 23/00

(54) **HANDWERKZEUGMASCHINE**
HAND-HELD POWER TOOL
MACHINE-OUTIL PORTATIVE

(30) Priorität: 25.02.2010 DE 102010002353
(43) Veröffentlichungstag der Anmeldung: 02.01.2013
(73) Patentinhaber: Robert Bosch GmbH, 70442 Stuttgart (DE)
(72) Erfinder: WAN, Mohsein, 14000 Bukit Mertajam Penang (MY); LOW, Chun How, 11200 Tanjong Bungah Penang (MY); LEE, Siew Yuen, Pulau Pinang (MY); LOH, Chun Chee, 11900 Bayan Lepas Penang (MY)
(86) Internationale Anmeldenummer: PCT/EP2011/051708
(87) Internationale Veröffentlichungsnummer: WO 2011/104105

(56) Entgegenhaltungen:
- EP-A1- 2 039 449
- EP-A2- 1 938 927
- DE-B- 1 030 268
- US-A- 5 013 194
- US-A1- 2004 232 631
- US-B1- 7 028 589

## Beschreibung

### Stand der Technik

Die vorliegende Erfindung betrifft eine Handwerkzeugmaschine mit einer Werkzeugaufnahme, die eine Mehrkant-Innenaufnahme und eine Mehrkant-Außenaufnahme aufweist, wobei die Mehrkant-Innenaufnahme zur Verbindung mit einem ersten Einsatzwerkzeug ausgebildet ist, das mit einer der Werkzeugaufnahme zugeordneten Verriegelungsvorrichtung in der Mehrkant-Innenaufnahme verriegelbar ist, und die Mehrkant-Außenaufnahme zur Verbindung mit einem zweiten Einsatzwerkzeug ausgebildet ist, das eine auf die Mehrkant-Außenaufnahme aufschiebbare Innenmehrkant-Kupplung aufweist.

Aus der EP 2 039 449 A1 ist eine derartige, als Drehschlagschrauber ausgebildete Handwerkzeugmaschine bekannt, die eine Werkzeugaufnahme aufweist, die sowohl mit einem Einsatzwerkzeug mit einer Außenmehrkant-Kupplung, z. B. einem Schrauberbit, als auch mit einem Einsatzwerkzeug mit einer Innenmehrkant-Kupplung, z. B. einem Steckschlüssel, verbindbar ist. Zur Fixierung eines Schrauberbits an der Werkzeugaufnahme ist eine Verriegelungsvorrichtung vorgesehen, bei der eine Betätigungshülse mittels einer zugeordneten Kompressionsfeder in eine vom Schrauberbit wegweisende axiale Richtung vorgespannt wird und zum Entriegeln des Schrauberbits gegen die Kraft dieser Feder axial in Richtung des Schrauberbits geschoben werden muss. Zur Fixierung eines z. B. gemäß europäischen oder nordamerikanischen Industriestandards hergestellten Steckschlüssels an der Werkzeugaufnahme wird eine U-förmige Haltefeder an der Mehrkant-Außenaufnahme der Werkzeugaufnahme befestigt, an der elastisch federnde Vorsprünge vorgesehen sind, die nach einem Aufschieben des Steckschlüssels auf die Werkzeugaufnahme in eine innere nutartige Aussparung an der Innenmehrkant-Kupplung des Steckschlüssels eingreifen.

Nachteilig am Stand der Technik ist, dass die Handhabung der Handwerkzeugmaschine umständlich und kompliziert ist, da z. B. bei einer Betätigung der Betätigungshülse zur Entriegelung und Entnahme des Schrauberbits aus der Mehrkant-Innenaufnahme sowohl die Betätigungshülse als auch der Schrauberbit in die gleiche axiale Richtung zu bewegen sind, und bei einem Aufschieben des Steckschlüssels auf die Mehrkant-Außenaufnahme ein Verkanten des Steckschlüssels oder ein ungewolltes Verrutschen der U-förmigen Haltefeder vermieden werden muss. Dies führt zu Komforteinbussen bei der Benutzung einer derartigen Handwerkzeugmaschine.

### Offenbarung der Erfindung

Eine Aufgabe der Erfindung ist es daher, eine neue Handwerkzeugmaschine bereit zu stellen, die eine Werkzeugaufnahme aufweist, die einfach und komfortabel zu bedienen ist und eine sichere und zuverlässige Montage zugeordneter Einsatzwerkzeuge ermöglicht.

Dieses Problem wird durch eine Handwerkzeugmaschine gemäß Anspruch 1 gelöst.

Die Erfindung ermöglicht somit die Bereitstellung einer Handwerkzeugmaschine, die zuverlässig und stabil mit einem Einsatzwerkzeug mit Innenmehrkant-Kupplung verbindbar ist und bei einer Entriegelung und Entnahme eines Einsatzwerkzeugs mit Außenmehrkant-Kupplung einfach und sicher zu handhaben ist.

Erfindungsgemäß weist die Verriegelungsvorrichtung ein Rückhalteelement auf, das dazu ausgebildet ist, das Betätigungselement im Betrieb der Handwerkzeugmaschine in der Verriegelungsposition zu blockieren.

Somit kann eine sichere Blockierung des Betätigungselements in der Verriegelungsposition ermöglicht werden.

Das Rückhalteelement ist bevorzugt nach Art eines C-Rings ausgebildet, der radiale Erweiterungen zum Blockieren des Betätigungselements aufweist.

Somit kann ein preiswertes und stabiles Rückhalteelement bereitgestellt werden.

Erfindungsgemäß weist die Verriegelungsvorrichtung ein Federelement auf, das dazu ausgebildet ist, das Betätigungselement mit einer vorgegebenen Federkraft in Richtung des ersten Einsatzwerkzeugs in die Verriegelungsposition zu beaufschlagen.

Die Erfindung ermöglicht somit die Bereitstellung einer Verriegelungsvorrichtung, bei der das Betätigungselement von dem Federelement zuverlässig in der Verriegelungsposition gehalten wird.

Das von dem Federelement mit der vorgegebenen Federkraft beaufschlagte Betätigungselement weist bevorzugt ein kragenartiges Stützelement auf, das in der Verriegelungsposition gegen die radialen Erweiterungen des Rückhalteelements anliegt.

Somit kann das Betätigungselement in der Verriegelungsposition auf einfache Art und Weise von dem Rückhalteelement blockiert werden.

Gemäß einer Ausführungsform ist an der Werkzeugaufnahme eine axiale Erweiterung vorgesehen, an der ein elastisch verformbares Halteglied zum Halten des zweiten Einsatzwerkzeugs befestigbar ist.

Somit kann ein Einsatzwerkzeug mit Innenmehrkant-Kupplung sicher und zuverlässig mit der Werkzeugaufnahme verbunden werden.

Die axiale Erweiterung weist bevorzugt eine äußere nutartige Aussparung zur Befestigung des Halteglieds auf. Die axiale Erweiterung und/oder die äußere nutartige Aussparung sind vorzugsweise ringförmig ausgebildet.

Somit kann eine einfache und präzise Ausgestaltung der axialen Erweiterung bzw. der nutartigen Aussparung zur sicheren und stabilen Befestigung des Halteglieds an der axialen Erweiterung ermöglicht werden.

Das Halteglied weist bevorzugt ein Federelement und ein von diesem mit einer vorgegebenen Federkraft radial beaufschlagtes Halteelement auf.

Die Erfindung ermöglicht somit die Bereitstellung eines unkomplizierten und zuverlässigen Halteglieds.

Gemäß einer Ausführungsform weist das Federelement einen aus elastischem Gummimaterial ausgebildeten O-Ring und das Halteelement einen aus Metall ausgebildeten C-Ring auf.

Die Erfindung ermöglicht somit die Bereitstellung eines einfach und schnell montierbaren, kostengünstigen Halteglieds.

Das Halteglied ist bevorzugt dazu ausgebildet, in eine an der Innenmehrkant-Kupplung des zweiten Einsatzwerkzeugs vorgesehene, innere nutartige Aussparung des zweiten Einsatzwerkzeugs einzugreifen.

Die Erfindung ermöglicht somit die einfache und sichere Fixierung von gemäß europäischen oder nordamerikanischen Industriestandards ausgebildeten Einsatzwerkzeugen mit Innenmehrkant-Kupplung an der Werkzeugaufnahme.

Gemäß einer Ausführungsform sind die Werkzeugaufnahme und die axiale Erweiterung einstückig ausgebildet.

Somit kann eine stabile und zuverlässige Werkzeugaufnahme bereitgestellt werden.

Das Eingangs genannte Problem wird auch durch eine Werkzeugaufnahme gemäß Anspruch 8 gelöst.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine mit einem Einsatzwerkzeug gemäß einer Ausführungsform,
Fig. 2 eine perspektivische Ansicht der Abtriebswelle mit der Werkzeugaufnahme von Fig. 1, mit einer Verriegelungsvorrichtung und einem Halteglied gemäß einer Ausführungsform,
Fig. 3 eine perspektivische Explosionsansicht der Abtriebswelle mit der Werkzeugaufnahme von Fig. 1 und 2 bei einer Montage der Verriegelungsvorrichtung sowie des Halteglieds von Fig. 2,
Fig. 4 eine Schnittansicht der Abtriebswelle mit der Werkzeugaufnahme, sowie der Verriegelungsvorrichtung und dem Halteglied von Fig. 2 und 3,
Fig. 5 eine Schnittansicht der Anordnung von Fig. 4 mit einem gemäß europäischen oder nordamerikanischen Industriestandards ausgebildeten Einsatzwerkzeug mit Innenmehrkant-Kupplung,
Fig. 6 eine perspektivische Ansicht der Abtriebswelle mit der Werkzeugaufnahme von Fig. 3 mit einer Außenaufnahme und einem Halteglied gemäß einer weiteren Ausführungsform, und
Fig. 7 eine Schnittansicht der mit der Abtriebswelle von Fig. 6 versehenen Anordnung von Fig. 4 mit einem gemäß europäischen oder nordamerikanischen Industriestandards ausgebildeten Einsatzwerkzeug mit Innenmehrkant-Kupplung.

### Beschreibung der Ausführungsbeispiele

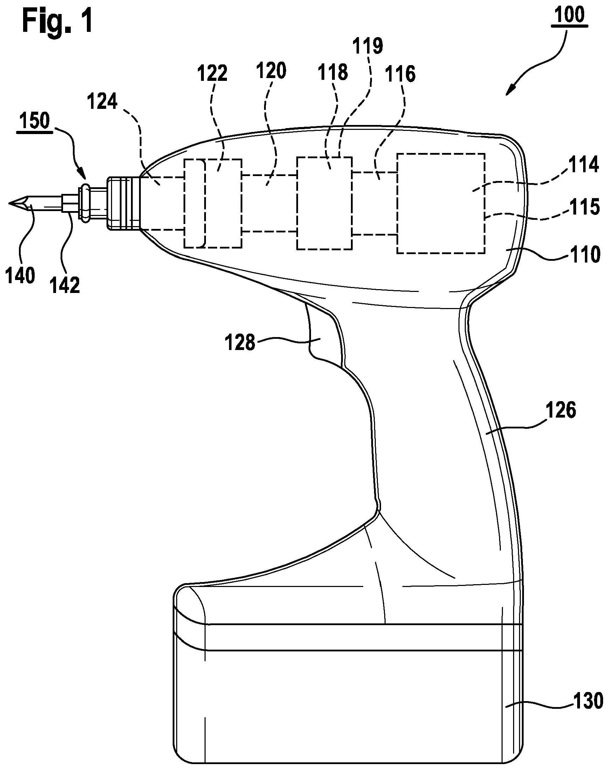

Fig. 1 zeigt eine mit einer Werkzeugaufnahme 150 versehene Handwerkzeugmaschine 100, die ein Gehäuse 110 mit einem Handgriff 126 aufweist. Gemäß einer Ausführungsform ist die Handwerkzeugmaschine 100 zur netzunabhängigen Stromversorgung mechanisch und elektrisch mit einem Akkupack 130 verbindbar.

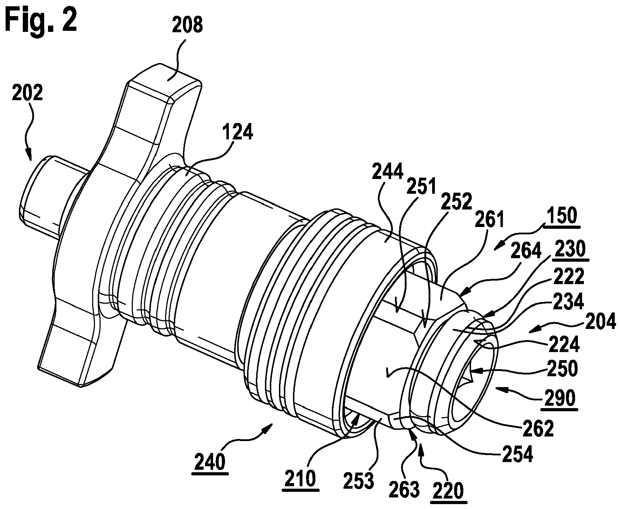

Die Handwerkzeugmaschine 100 ist beispielhaft als Akku-Drehschlagschrauber ausgebildet. Es wird jedoch darauf hingewiesen, dass die vorliegende Erfindung nicht auf Akku-Drehschlagschrauber beschränkt ist, sondern vielmehr bei unterschiedlichen Elektrowerkzeugen Anwendung finden kann, bei denen ein Werkzeug in Drehungen versetzt wird, z. B. bei einem Schrauber, einem Bohrschrauber, einer Schlagbohrmaschine etc., unabhängig davon, ob das Elektrowerkzeug netzunabhängig mit einem Akkupack oder netzabhängig betreibbar ist. Darüber hinaus wird darauf hingewiesen, dass die vorliegende Erfindung nicht auf motorbetriebene Handwerkzeugmaschinen beschränkt ist, sondern allgemein bei Werkzeugen verwendbar ist, bei denen die bei Fig. 2 bis 7 beschriebene Werkzeugaufnahme 150 Anwendung finden kann.

In dem Gehäuse 110 sind ein von dem Akkupack 130 mit Strom versorgter, elektrischer Antriebsmotor 114, ein Getriebe 118 und ein Schlagwerk 122 angeordnet. Der Antriebsmotor 114 ist z. B. über einen Handschalter 128 betätigbar, d. h. ein- und ausschaltbar, und kann ein beliebiger Motortyp sein, z. B. ein elektronisch kommutierter Motor oder ein Gleichstrommotor. Vorzugsweise ist der Antriebsmotor 114 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung verzichtet wird.

Der Antriebsmotor 114 ist über eine zugeordnete Motorwelle 116 mit dem Getriebe 118 verbunden, das eine Drehung der Motorwelle 116 in eine Drehung einer zwischen Getriebe 118 und Schlagwerk 122 vorgesehenen Antriebswelle 120 umwandelt. Diese Umwandlung erfolgt bevorzugt derart, dass die Antriebswelle 120 sich relativ zur Motorwelle 116 mit vergrößertem Drehmoment, aber verringerter Drehgeschwindigkeit dreht. Der Antriebsmotor 114 ist illustrativ in einem Motorgehäuse 115 angeordnet und das Getriebe 118 in einem Getriebegehäuse 119, wobei das Getriebegehäuse 119 und das Motorgehäuse 115 beispielhaft in dem Gehäuse 110 angeordnet sind.

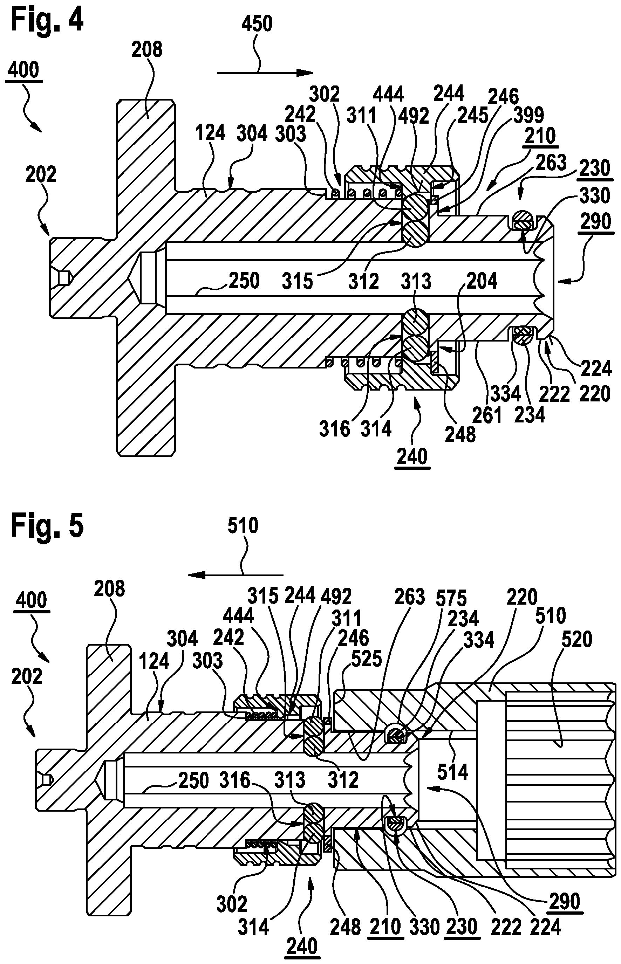

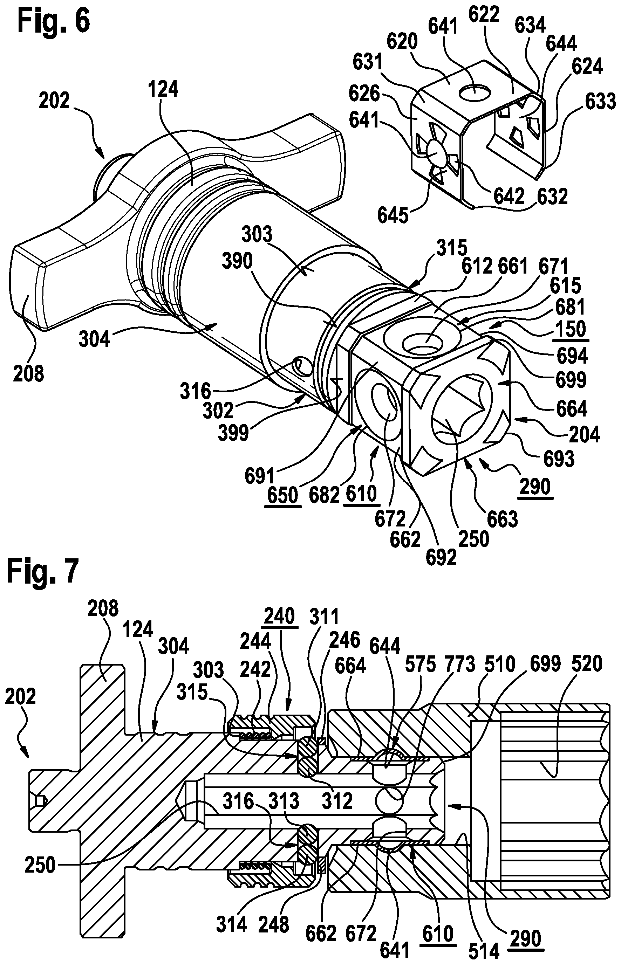

Das mit der Antriebswelle 120 verbundene Schlagwerk 122 ist beispielhaft ein Dreh- bzw. Rotationsschlagwerk, das schlagartige Drehimpulse mit hoher Intensität erzeugt und auf eine Abtriebswelle 124, z. B. eine Abtriebsspindel, überträgt. An der Abtriebswelle 124 ist die Werkzeugaufnahme 150 vorgesehen, die bevorzugt zur Aufnahme von Einsatzwerkzeugen ausgebildet ist und gemäß einer Ausführungsform sowohl mit einem Einsatzwerkzeug 140 mit Außenmehrkant-Kupplung 142, als auch mit einem Einsatzwerkzeug mit Innenmehrkant-Kupplung (z. B. Steckschlüssel 510 in Fig. 5 oder Fig. 7) verbindbar ist. Das Einsatzwerkzeug 140 ist beispielhaft als Schrauberbit mit der Außenmehrkant-Kupplung 142, illustrativ einer Sechskant-Kupplung, ausgebildet, die in einer geeigneten Innenaufnahme (290 in Fig. 2) der Werkzeugaufnahme 150 angeordnet ist. Ein derartiges Schrauberbit ist hinreichend aus dem Stand der Technik bekannt, sodass hier zwecks Knappheit der Beschreibung auf eine eingehende Beschreibung verzichtet wird.

Fig. 2 zeigt die Abtriebswelle 124 von Fig. 1, deren mit einem Abtriebsnocken 208 versehener proximaler Endbereich 202 in Fig. 1 mit dem Schlagwerk 122 der Handwerkzeugmaschine 100 verbunden ist. An der Abtriebswelle 124 ist die Werkzeugaufnahme 150 vorgesehen, in deren distalem Endbereich 204 gemäß einer Ausführungsform eine axiale Erweiterung 220 ausgebildet ist. Diese ist vorzugsweise an die Werkzeugaufnahme 150 angeformt und bevorzugt einstückig mit dieser ausgebildet.

Die mit einer Außenaufnahme 210 und einer Innenaufnahme 290 versehene Werkzeugaufnahme 150 ist illustrativ an die Abtriebswelle 124 angeformt und bevorzugt einstückig mit dieser ausgebildet. Der Außenaufnahme 210 ist ein bevorzugt elastisch verformbares Halteglied 230 und der Innenaufnahme 290 eine betätigbare Verriegelungsvorrichtung 240 zugeordnet.

Die Innenaufnahme 290 ist beispielhaft nach Art einer Mehrkant-Innenaufnahme im Inneren der Abtriebswelle 124 ausgebildet und dient zur Aufnahme des Schrauberbits 140 von Fig. 1. Illustrativ weist die Innenaufnahme 290 ein Sechskant-Innenprofil 250 auf. Der Innenaufnahme 290 ist die über ein bevorzugt als Betätigungshülse ausgeführtes Betätigungselement 244 betätigbare Verriegelungsvorrichtung 240 zur Verriegelung des Schrauberbits 140 von Fig. 1 zugeordnet.

Die Außenaufnahme 210 ist beispielhaft eine Mehrkant-Außenaufnahme, bevorzugt eine Vierkant-Außenaufnahme, die in radialer Richtung gesehen illustrativ vier vorzugsweise plane Seitenflächen 261, 262, 263, 264 aufweist und gemäß einer Ausführungsform zur Aufnahme eines gemäß europäischen oder nordamerikanischen Industriestandards hergestellten Einsatzwerkzeugs mit Innenmehrkant-Kupplung (z. B. Steckschlüssel 510 von Fig. 5 oder Fig. 7) ausgebildet ist. Die Seitenflächen 261, 262, 263, 264 sind über abgeschrägte Kanten miteinander verbunden, z. B. sind die Flächen 261 und 262 über eine abgeschrägte Kante 251 und die Flächen 262 und 263 über eine abgeschrägte Kante 253 miteinander verbunden. Die abgeschrägten Kanten weisen ihrerseits zur axialen Erweiterung 220 hin abgeschrägte Endbereiche auf, z. B. weisen die Kanten 251, 253 abgeschrägte Endbereiche 252 bzw. 254 auf. Die axiale Erweiterung 220 hat einen Abschlusskragen 222, der ein in distaler Richtung der Abtriebswelle 124 konusförmig abgeschrägtes Ende 224 aufweist.

Das konusförmig abgeschrägte Ende 224, die abgeschrägten Endbereiche 252, 254 und die abgeschrägten Kanten 251, 253 sind bevorzugt dazu ausgebildet, ein Aufschieben eines entsprechenden Einsatzwerkzeugs mit Innenmehrkant-Kupplung (z. B. Steckschlüssel 510 von Fig. 5 oder Fig. 7) auf die Vierkant-Außenaufnahme 210 zu vereinfachen. Zur weiteren Vereinfachung kann der Durchmesser des Abschlusskragens 222 der axialen Erweiterung 220 derart vorgegeben sein, dass dieser geringer als der Abstand zwischen zwei gegenüberliegenden Seitenflächen der Außenaufnahme 210 ist, z. B. der Abstand zwischen den Seitenflächen 261 und 263 oder 262 und 264.

Zur Befestigung eines gemäß europäischen oder nordamerikanischen Industriestandards hergestellten Einsatzwerkzeugs mit Innenmehrkant-Kupplung (z. B. Steckschlüssel 510 von Fig. 5) an der Werkzeugaufnahme 150 ist das Halteglied 230 ausgebildet. Dieses ist in Fig. 2 an der axialen Erweiterung 220 befestigt und weist illustrativ ein Halteelement 234 auf, das bevorzugt als elastisch verformbarer, metallener C-Ring ausgebildet ist.

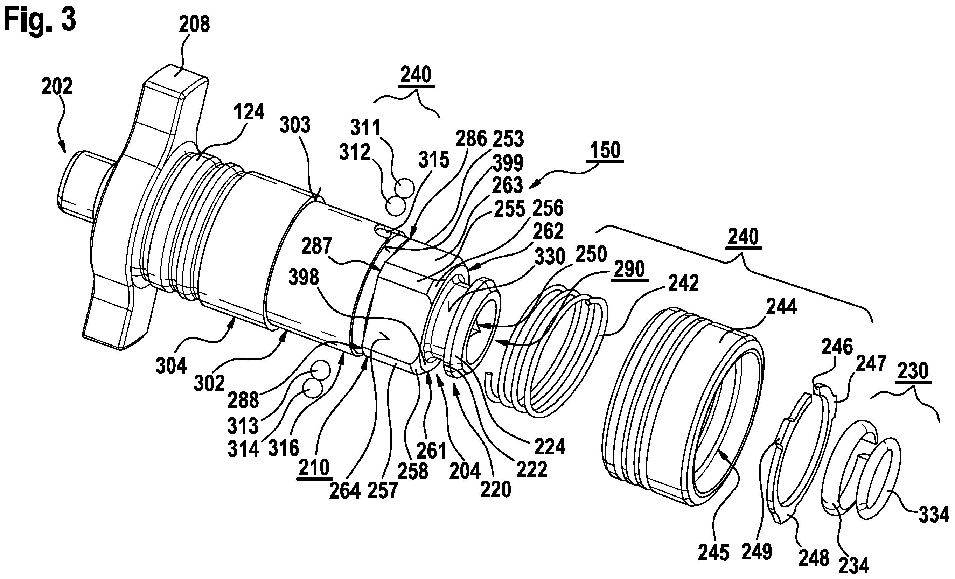

Fig. 3 zeigt die Abtriebswelle 124 mit der Werkzeugaufnahme 150 und der axialen Erweiterung 220, sowie dem Halteglied 230 und der Verriegelungsvorrichtung 240 von Fig. 2. Fig. 3 dient zur Illustration einer beispielhaften Montage des Halteglieds 230 und der Verriegelungsvorrichtung 240 an der mit der Innenaufnahme 290 und der Außenaufnahme 210 versehenen Werkzeugaufnahme 150 bzw. der Abtriebswelle 124. Wie aus Fig. 3 ersichtlich ist, sind zwischen den Seitenflächen 263 und 264 bzw. 264 und 261 der Außenaufnahme 210 abgeschrägte Kanten 255 bzw. 257 vorgesehen. Diese weisen abgeschrägte Endbereiche 256 bzw. 258 auf.

Gemäß einer Ausführungsform weist die Abtriebswelle 124 ausgehend von dem Abtriebsnocken 208 in Richtung des distalen Endbereichs 204 einen ersten bevorzugt zylinderförmigen Abschnitt 304 mit einem ersten Durchmesser D1 auf. An einer ersten Schulter 303 verjüngt sich die Welle 124 und geht in einen zweiten zylinderförmigen Abschnitt 302 mit einem zweiten Durchmesser D2 über, mit D2 < D1. An einer zweiten Schulter 399 verjüngt sich die Abtriebswelle 124 erneut und geht in die Außenaufnahme 210 über, die ihrerseits an einer dritten Schulter 398 in die axiale Erweiterung 220 übergeht. Im Bereich der zweiten Schulter 399 ist am zweiten zylinderförmigen Abschnitt 302 mindestens eine erste radiale Öffnung 315 ausgebildet, der beispielhaft eine zweite, diametral gegenüberliegend angeordnete Öffnung 316 zugeordnet ist. Im Bereich zwischen der zweiten Schulter 399 und der Außenaufnahme 210 ist mindestens eine nutartige Aussparung 286 ausgebildet. Bevorzugt sind vier nutartige Aussparungen vorgesehen, von denen in Fig. 3 nur die Aussparungen 286, 287, 288 sichtbar sind, die jeweils zwischen der zweiten Schulter 399 und zugeordneten, abgeschrägten Kanten 253, 255 bzw. 257 ausgebildet sind. An der axialen Erweiterung 220 ist zwischen der dritten Schulter 398 und dem Abschlusskragen 222 eine äußere nutartige Aussparung in Form einer Ringnut 330 ausgebildet.

Es wird darauf hingewiesen, dass der Abstand zwischen gegenüberliegenden abgeschrägten Kanten, z. B. zwischen den Kanten 253 und 257, bevorzugt etwa dem Durchmesser D2 des zweiten Abschnitts 302 der Abtriebswelle 124 entspricht, sodass zwischen diesen abgeschrägten Kanten 253, 257 und der zweiten Schulter 399 die oben beschriebenen nutartigen Aussparungen 286 bzw. 288 ausgebildet sind. Der Abstand zwischen gegenüberliegenden Seitenflächen der Vierkant-Außenaufnahme 210, d. h. der Abstand zwischen den Seitenflächen 261 und 263 oder der Abstand zwischen den Seitenflächen 262 und 264, ist beispielhaft kleiner als der Durchmesser D2 und bevorzugt derart vorgegeben, dass zwischen den Seitenflächen 261, 262, 263, 264 und der Schulter 399 keine Aussparungen ausgebildet sind. Es ist jedoch ebenso möglich, auch zwischen den Seitenflächen 261, 262, 263, 264 und der Schulter 399 nutartige Aussparungen auszubilden, die darüber hinaus mit den nutartigen Aussparungen 286, 287, 288 z. B. eine Ringnut bilden können.

Gemäß einer Ausführungsform weist die Verriegelungsvorrichtung 240 die Betätigungshülse 244, ein illustrativ als Kompressionsfeder ausgebildetes Federelement 242, ein beispielhaft als C-Ring ausgebildetes Rückhalteelement 246 und vier Kugeln 311, 312, 313, 314 auf, wobei die Kugeln 311, 312 in die Öffnung 315 und die Kugeln 313, 314 in die Öffnung 316 der Abtriebswelle 124 einführbar sind. Die Kugeln 311, 312, 313, 314 werden von der in Richtung des Abtriebsnockens 208 auf die Abtriebswelle 124 aufschiebbaren Betätigungshülse 244 in den Öffnungen 315 bzw. 316 gehalten, wie unten bei Fig. 4 gezeigt.

Bei einer beispielhaften Montage der Verriegelungsvorrichtung 240 an der Werkzeugaufnahme 150 bzw. der Abtriebswelle 124 wird nach Einführen der Kugeln 311, 312, 313, 314 in die Öffnungen 315 bzw. 316 zunächst die Kompressionsfeder 242, dann die mit einem kragenartigen Stützelement 245 versehene Betätigungshülse 244 und abschließend der mit radialen Erweiterungen 247, 248, 249 versehene Rückhalte-C-Ring 246 derart in Richtung des Abtriebsnockens 208 auf die Abtriebswelle 124 aufgeschoben, dass der Rückhalte-C-Ring 246 in die nutartigen Aussparungen 286, 287, 288 eingreift. Somit blockieren die radialen Erweiterungen 247, 248, 249 das kragenartige Stützelement 245, sodass die Verriegelungsvorrichtung 240 auf der Abtriebswelle 124 fixiert ist.

Das Halteglied 230 weist gemäß einer Ausführungsform den metallenen C-Ring 234 von Fig. 2 und ein bevorzugt als O-Ring aus einem elastischen Gummimaterial ausgebildetes Federelement 334 auf. Dieses dient dazu, nach einer Montage den C-Ring 234 radial mit einer vorgegebenen Federkraft zu beaufschlagen. Zur Montage des Halteglieds 230 an der axialen Erweiterung 220 wird zunächst der elastische O-Ring 334 über den Abschlusskragen 222 in die Ringnut 330 geschoben bzw. gedrückt. Dann wird der metallene C-Ring 234 radial über dem O-Ring 334 angeordnet, z. B. durch Aufschieben über den Abschlusskragen 222.

Fig. 4 zeigt eine Anordnung 400 mit der Abtriebswelle 124, der Werkzeugaufnahme 150 und der axialen Erweiterung 220 von Fig. 2 nach einer oben bei Fig. 3 beschriebenen Montage des Halteglieds 230 und der Verriegelungsvorrichtung 240 von Fig. 3. Hierbei ist die Verriegelungsvorrichtung 240 in einer zugeordneten Verriegelungsposition gezeigt.

Gemäß einer Ausführungsform ist die Kompressionsfeder 242 der Verriegelungsvorrichtung 240 derart zwischen der ersten, an der Abtriebswelle 124 vorgesehenen Schulter 303 und einer ersten ringförmigen Innenschulter 444 der Betätigungshülse 244 angeordnet, dass diese durch die Federkraft der Kompressionsfeder 242 in Richtung des distalen Endes 204 der Werkzeugaufnahme 150 bzw. in Richtung eines Pfeils 450 beaufschlagt bzw. gedrückt wird. Hierdurch wird die Betätigungshülse 244 mit ihrem kragenartigen Stützelement 245 in Richtung des Pfeils 450 gegen den Rückhalte-C-Ring 246 bzw. dessen radiale Erweiterung 248 (sowie die radialen Erweiterungen 247 und 249 von Fig. 3) gedrückt und somit axial blockiert.

Zwischen dem kragenartigen Stützelement 245 und dem kragenartigen Vorsprung 444 ist ein bevorzugt ringförmig ausgebildeter Kragen 492 vorgesehen. Dieser blockiert in der Verriegelungsposition die in den Öffnungen 315, 316 radial einwärts gedrückten Kugeln 311, 312 bzw. 313, 314, die zur Verriegelung des Schrauberbits 140 von Fig. 1 in der Sechskant-Innenaufnahme 290 z. B. in eine an dessen Außensechskant-Kupplung 142 beispielsweise gemäß DIN 3126-E6.3 vorgesehene, äußere Ringnut eingreifen.

Zur Entriegelung der Verriegelungsvorrichtung 240 wird die Betätigungshülse 244 gegen die Kraft der Kompressionsfeder 442 axial in Richtung des Abtriebsnockens 208 bewegt. Hierbei gibt der Kragen 492 die Kugeln 311, 312, 313, 314 frei, sodass diese sich beim Herausziehen des Schrauberbits 140 von Fig. 1 radial auswärts bewegen können und diesen somit freigeben.

Fig. 5 zeigt die Anordnung von Fig. 4 in Verbindung mit einem beispielhaft nach europäischen oder nordamerikanischen Industriestandards ausgebildeten Einsatzwerkzeug 510, das eine Mehrkant-Arbeitsschnittstelle 520 und eine Innenmehrkant-Kupplung 514 mit einer darin vorgesehenen nutartigen Aussparung 575 aufweist. Illustrativ ist das Einsatzwerkzeug 510 als Steckschlüssel mit einer Zwölfkant-Arbeitsschnittstelle und einer Innenvierkant-Kupplung mit einer daran vorgesehenen inneren Umfangsnut ausgebildet. Ein derartiger Steckschlüssel ist hinreichend aus dem Stand der Technik bekannt, sodass hier zwecks Knappheit der Beschreibung auf eine eingehende Beschreibung verzichtet wird.

Zur Befestigung des Steckschlüssels 510 an der Vierkant-Außenaufnahme 210 wird dieser wie mit einem Pfeil 510 angedeutet in Richtung des Abtriebsnockens 208 auf die Werkzeugaufnahme 150 aufgeschoben. Hierbei drückt die Innenmehrkant-Kupplung 514 zunächst den metallenen C-Ring 234 radial einwärts in die Ringnut 330, sodass der Gummi-O-Ring 334 elastisch verformt wird, bis die Umfangsnut 575 des Steckschlüssels 510 und die Ringnut 330 der axialen Erweiterung 220 einander gegenüberliegend angeordnet sind, bzw. kongruieren. Dies ist bevorzugt der Fall, wenn der Steckschlüssel 510 mit einem Endabschnitt 525 gegen den Rückhalte-C-Ring 246 anliegt. Der Gummi-O-Ring 334 kann somit durch eine elastische Verformung den C-Ring 234 radial auswärts drücken, sodass dieser in die Umfangsnut 575 eingreift. Hierdurch wird eine lösbare Befestigung des Steckschlüssels 510 an der Werkzeugaufnahme 150 erreicht.

In Fig. 5 ist die Betätigungshülse 244 beispielhaft in der Entriegelungsposition gezeigt, in der die Kugeln 311, 312, 313, 314 sich zur Entnahme bzw. beim Herausziehen des Schrauberbits 140 von Fig. 1 radial auswärts bewegen können. Hierzu wird die Betätigungshülse 244 gegen die Kraft der Kompressionsfeder 242 axial in Richtung des Pfeils 510 verschoben und gibt somit die Kugeln 311, 312, 313, 314 wie oben bei Fig. 4 beschrieben frei.

Fig. 6 zeigt die Abtriebswelle 124 mit der Werkzeugaufnahme 150 von Fig. 3 mit einer beispielhaft als Vierkant-Außenaufnahme ausgebildeten Außenaufnahme 610 und einem Halteglied 620 gemäß einer weiteren Ausführungsform. Das Halteglied 620 ist illustrativ als eine etwa U-förmige Haltefeder ausgebildet.

Die Vierkant-Außenaufnahme 610 weist beispielhaft im Bereich der zweiten Schulter 399, in dem eine Ringnut 390 zur Aufnahme des Rückhalte-C-Rings 246 vorgesehen ist, einen proximalen Abschnitt 612 auf. Dieser geht in distaler Richtung in einen abgestuften Bereich 615 mit vorzugsweise planen Seitenflächen 661, 662, 663, 664 über, die durch einen kragenartigen Flansch 699 abgeschlossen werden. Die Seitenflächen 661, 662, 663, 664 sind über abgeschrägte Kanten miteinander verbunden, z. B. sind die Flächen 661, 662 über eine abgeschrägte Kante 691, die Flächen 662, 663 über eine abgeschrägte Kante 692, die Flächen 663, 664 über eine abgeschrägte Kante 693, und die Flächen 664, 661 über eine abgeschrägte Kante 694 miteinander verbunden.

An der Vierkant-Außenaufnahme 610 ist illustrativ ein Befestigungsglied 650 zur Befestigung eines gemäß japanischen Industriestandards hergestellten Einsatzwerkzeugs mit Innenmehrkant-Kupplung ausgebildet. Das Befestigungsglied 650 hat konusförmig abgestufte Öffnungen, die in jeder Seitenfläche 661, 662, 663, 664 vorgesehen sind. Illustrativ ist in der Seitenfläche 661 eine mit einem konusförmigen Abschnitt 681 versehene Öffnung 671 vorgesehen. In der Seitenfläche 662 ist eine mit einem konusförmigen Abschnitt 682 versehene Öffnung 672 vorgesehen.

Um eine Verbindung der Vierkant-Außenaufnahme 610 mit einem gemäß europäischen oder nordamerikanischen Industriestandards hergestellten Steckschlüssel (z. B. Steckschlüssel 510 von Fig. 5) zu ermöglichen, ist die U-förmige Haltefeder 620 vorgesehen. Diese hat eine mit einer Öffnung 641 versehene Deckfläche 622, an der über abgeschrägte Kanten 631, 634 federnde Wandelemente 626 bzw. 624 ausgebildet sind, die ihrerseits in abgeschrägte Endbereiche 632 bzw. 633 übergehen. In diesen Wandelementen 626, 624 sind wulstartige Ausbuchtungen 641 bzw. 644 vorgesehen, die durch zugeordnete Öffnungen 642 und Federzungen 645 federnd ausgebildet sind. Gemäß einer Ausführungsform ist die Haltefeder 620 derart auf die Vierkant-Außenaufnahme 610 der Werkzeugaufnahme 150 aufschiebbar, dass die Deckfläche 622 und die Wandelemente 626, 623 die Seitenflächen 661 bzw. 662 und 664 abdecken und die abgeschrägten Endbereiche 632, 633 an den abgeschrägten Kanten 692 bzw. 693 anliegen und somit die Haltefeder 620 lösbar an der Vierkant-Außenaufnahme 610 befestigen.

Es wird darauf hingewiesen, dass die Vierkant-Außenaufnahme 610 und die Haltefeder 620, sowie die Verbindung der Vierkant-Außenaufnahme 610 mit einem gemäß japanischen Industriestandards hergestellten Steckschlüssel ausführlich in der EP 2 039 449 A1 beschrieben sind, auf deren Gegenstand ausdrücklich Bezug genommen wird. Somit kann hier zwecks Knappheit der Beschreibung auf eine eingehende Beschreibung verzichtet werden.

Fig. 7 zeigt die Anordnung 400 von Fig. 4 in der Entriegelungsposition gemäß Fig. 5, mit der modifizierten Vierkant-Außenaufnahme 610 und der daran befestigten Haltefeder 620 von Fig. 6, in Verbindung mit dem gemäß europäischen oder nordamerikanischen Industriestandards hergestellten Steckschlüssel 510 von Fig. 5. Wie aus Fig. 7 ersichtlich, greifen hierbei die wulstartigen Ausbuchtungen 641, 644 illustrativ in die Umfangsnut 575 des Steckschlüssels 510 ein. Darüber hinaus verdeutlicht Fig. 7 eine Öffnung 773 in der Seitenfläche 663 der Vierkant-Außenaufnahme 610.

## Patentansprüche

1. Handwerkzeugmaschine (100) mit einer Werkzeugaufnahme (150), die eine Mehrkant-Innenaufnahme (290) und eine Mehrkant-Außenaufnahme (210) aufweist, wobei die Mehrkant-Innenaufnahme (290) zur Verbindung mit einem ersten Einsatzwerkzeug (140) ausgebildet ist, das mit einer der Werkzeugaufnahme (150) zugeordneten Verriegelungsvorrichtung (240) in der Mehrkant-Innenaufnahme (290) verriegelbar ist, und die Mehrkant-Außenaufnahme (210) zur Verbindung mit einem zweiten Einsatzwerkzeug (510) ausgebildet ist, das eine auf die Mehrkant-Außenaufnahme (210) aufschiebbare Innenmehrkant-Kupplung (514) aufweist, **dadurch gekennzeichnet, dass** die Verriegelungsvorrichtung (240) ein Betätigungselement (244) aufweist, das zur Entriegelung des ersten Einsatzwerkzeugs (140) in einer vom ersten Einsatzwerkzeug (140) wegweisenden, axialen Richtung (510) von einer Verriegelungsposition in eine Entriegelungsposition verschiebbar ist, wobei die Verriegelungsvorrichtung (240) ein Rückhalteelement (246) aufweist, das dazu ausgebildet ist, das Betätigungselement (244) im Betrieb der Handwerkzeugmaschine (100) in der Verriegelungsposition zu blockieren, wobei das Rückhalteelement (246) nach Art eines C-Rings ausgebildet ist, der radiale Erweiterungen (247, 248, 249) zum Blockieren des Betätigungselements (244) aufweist, und die Verriegelungsvorrichtung (240) ein Federelement (242) aufweist, das dazu ausgebildet ist, das Betätigungselement (244) mit einer vorgegebenen Federkraft in Richtung (450) des ersten Einsatzwerkzeugs (140) in die Verriegelungsposition zu beaufschlagen, wobei das von dem Federelement (242) mit der vorgegebenen Federkraft beaufschlagte Betätigungselement (244) ein kragenartiges Stützelement (245) aufweist, das in der Verriegelungsposition gegen die radialen Erweiterungen (247, 248, 249) des Rückhalteelements (246) anliegt.

2. Handwerkzeugmaschine nach Anspruch 1, **dadurch gekennzeichnet, dass** an der Werkzeugaufnahme (150) eine axiale Erweiterung (220) vorgesehen ist, an der ein elastisch verformbares Halteglied (230) zum Halten des zweiten Einsatzwerkzeugs (510) befestigbar ist.

3. Handwerkzeugmaschine nach Anspruch 2, **dadurch gekennzeichnet, dass** die axiale Erweiterung (220) eine äußere nutartige Aussparung (330) zur Befestigung des Halteglieds (230) aufweist, wobei die axiale Erweiterung (220) und/oder die äußere nutartige Aussparung (330) ringförmig ausgebildet sind.

4. Handwerkzeugmaschine nach Anspruch 2 oder 3, **dadurch gekennzeichnet, dass** das Halteglied (230) ein Federelement (334) und ein von diesem mit einer vorgegebenen Federkraft radial beaufschlagtes Halteelement (234) aufweist.

5. Handwerkzeugmaschine nach Anspruch 4, **dadurch gekennzeichnet, dass** das Federelement (334) einen aus elastischem Gummimaterial ausgebildeten O-Ring und das Halteelement (234) einen aus Metall ausgebildeten C-Ring aufweist.

6. Handwerkzeugmaschine nach einem der Ansprüche 2 bis 5, **dadurch gekennzeichnet, dass** das Halteglied (230) dazu ausgebildet ist, in eine an der Innenmehrkant-Kupplung (514) des zweiten Einsatzwerkzeugs (510) vorgesehene innere nutartige Aussparung (575) des zweiten Einsatzwerkzeugs (510) einzugreifen.

7. Handwerkzeugmaschine nach einem der Ansprüche 2 bis 6, **dadurch gekennzeichnet, dass** die Werkzeugaufnahme (150) und die axiale Erweiterung (220) einstückig ausgebildet sind.

8. Werkzeugaufnahme (150), die eine Mehrkant-Innenaufnahme (290) und eine Mehrkant-Außenaufnahme (210) aufweist, wobei die Mehrkant-Innenaufnahme (290) zur Verbindung mit einem ersten Einsatzwerkzeug (140) ausgebildet ist, das mit einer der Werkzeugaufnahme (150) zugeordneten Verriegelungsvorrichtung (240) in der Mehrkant-Innenaufnahme (290) verriegelbar ist, und die Mehrkant-Außenaufnahme (210) zur Verbindung mit einem zweiten Einsatzwerkzeug (510) ausgebildet ist, das eine auf die Mehrkant-Außenaufnahme (210) aufschiebbare Innenmehrkant-Kupplung (514) aufweist, **dadurch gekennzeichnet, dass** die Verriegelungsvorrichtung (240) ein Betätigungselement (244) aufweist, das zur Entriegelung des ersten Einsatzwerkzeugs (140) in einer vom ersten Einsatzwerkzeug (140) wegweisenden, axialen Richtung (510) von einer Verriegelungsposition in eine Entriegelungsposition verschiebbar ist, wobei die Verriegelungsvorrichtung (240) ein Rückhalteelement (246) aufweist, das dazu ausgebildet ist, das Betätigungselement (244) im Betrieb der Handwerkzeugmaschine (100) in der Verriegelungsposition zu blockieren, wobei das Rückhalteelement (246) nach Art eines C-Rings ausgebildet ist, der radiale Erweiterungen (247, 248, 249) zum Blockieren des Betätigungselements (244) aufweist, und die Verriegelungsvorrichtung (240) ein Federelement (242) aufweist, das dazu ausgebildet ist, das Betätigungselement (244) mit einer vorgegebenen Federkraft in Richtung (450) des ersten Einsatzwerkzeugs (140) in die Verriegelungsposition zu beaufschlagen, wobei das von dem Federelement (242) mit der vorgegebenen Federkraft beaufschlagte Betätigungselement (244) ein kragenartiges Stützelement (245) aufweist, das in der Verriegelungsposition gegen die radialen Erweiterungen (247, 248, 249) des Rückhalteelements (246) anliegt.

## Claims

1. Handheld power tool (100) having a tool receptacle (150) which comprises a polygonal inner receptacle (290) and a polygonal outer receptacle (210), wherein the polygonal inner receptacle (290) is designed for connection to a first insert tool (140) which can be locked in the polygonal inner receptacle (290) by means of a locking device (240) assigned to the tool receptacle (150), and the polygonal outer receptacle (210) is designed for connection to a second insert tool (510) which has an inner polygonal coupling (514) which can be pushed onto the polygonal outer receptacle (210), **characterized in that** the locking device (240) has an actuating element (244) which, for unlocking the first insert tool (140), can be displaced from a locking position into an unlocking position in an axial direction (510) pointing away from the first insert tool (140), wherein the locking device (240) has a retaining element (246) which is designed to block the actuating element (244) in the locking position during operation of the handheld power tool (100), wherein the retaining element (246) is designed in the manner of a C ring which has radial widenings (247, 248, 249) for blocking the actuating element (244), and the locking device (240) has a spring element (242) which is designed to urge the actuating element (244) with a predetermined spring force in the direction (450) of the first insert tool (140) into the locking position, wherein the actuating element (244) acted on by the spring element (242) with the predetermined spring force has a collar-like supporting element (245) which bears in the locking position against the radial widenings (247, 248, 249) of the retaining element (246) .

2. Handheld power tool according to Claim 1, **characterized in that** the tool receptacle (150) has provided thereon an axial widening (220) to which an elastically deformable holding member (230) for holding the second insert tool (510) can be fastened.

3. Handheld power tool according to Claim 2, **characterized in that** the axial widening (220) has an outer groove-like cutout (330) for fastening the holding member (230), wherein the axial widening (220) and/or the outer groove-like cutout (330) are/is annular.

4. Handheld power tool according to Claim 2 or 3, **characterized in that** the holding member (230) has a spring element (334) and a holding element (234) radially acted on thereby with a predetermined spring force.

5. Handheld power tool according to Claim 4, **characterized in that** the spring element (334) has an O ring formed from elastic rubber material, and the holding element (234) has a C ring formed from metal.

6. Handheld power tool according to one of Claims 2 to 5, **characterized in that** the holding member (230) is designed to engage in an inner groove-like cutout (575) of the second insert tool (510) that is provided on the inner peripheral coupling (514) of the second insert tool (510).

7. Handheld power tool according to one of Claims 2 to 6, **characterized in that** the tool receptacle (150) and the axial widening (220) are formed in one piece.

8. Tool receptacle (150) which comprises a polygonal inner receptacle (290) and a polygonal outer receptacle (210), wherein the polygonal inner receptacle (290) is designed for connection to a first insert tool (140) which can be locked in the polygonal inner receptacle (290) by means of a locking device (240) assigned to the tool receptacle (150), and the polygonal outer receptacle (210) is designed for connection to a second insert tool (510) which has an inner polygonal coupling (514) which can be pushed onto the polygonal outer receptacle (210), **characterized in that** the locking device (240) has an actuating element (244) which, for unlocking the first insert tool (140), can be displaced from a locking position into an unlocking position in an axial direction (510) pointing away from the first insert tool (140), wherein the locking device (240) has a retaining element (246) which is designed to block the actuating element (244) in the locking position during operation of the handheld power tool (100), wherein the retaining element (246) is designed in the manner of a C ring which has radial widenings (247, 248, 249) for blocking the actuating element (244), and the locking device (240) has a spring element (242) which is designed to urge the actuating element (244) with a predetermined spring force in the direction (450) of the first insert tool (140) into the locking position, wherein the actuating element (244) acted on by the spring element (242) with the predetermined spring force has a collar-like supporting element (245) which bears in the locking position against the radial widenings (247, 248, 249) of the retaining element (246).

## Revendications

1. Machine-outil portative (100) comprenant un logement d'outil (150) qui présente un logement intérieur à profil polygonal (290) et un logement extérieur à profil polygonal (210), le logement intérieur à profil polygonal (290) étant réalisé pour la connexion à un premier outil d'insertion (140) qui peut être verrouillé avec un dispositif de verrouillage (240) associé au logement d'outil (150) dans le logement intérieur à profil polygonal (290), et le logement extérieur à profil polygonal (210) étant réalisé pour la connexion à un deuxième outil d'insertion (510) qui présente un accouplement à profil intérieur polygonal (514) pouvant être enfoncé sur le logement extérieur à profil polygonal (210), **caractérisée en ce que** le dispositif de verrouillage (240) présente un élément d'actionnement (244) qui peut être déplacé, pour déverrouiller le premier outil d'insertion (140), dans une direction axiale (510) détournée du premier outil d'insertion (140), d'une position de verrouillage dans une position de déverrouillage, le dispositif de verrouillage (240) présentant un élément de retenue (246) qui est réalisé pour bloquer l'élément d'actionnement (244) dans la position de verrouillage pendant le fonctionnement de la machine-outil à main (100), l'élément de retenue (246) étant réalisé à la manière d'un collier en C qui présente des élargissements radiaux (247, 248, 249) pour bloquer l'élément d'actionnement (244), et le dispositif de verrouillage (240) présentant un élément de ressort (242) qui est réalisé pour solliciter l'élément d'actionnement (244) dans la position de verrouillage avec une force de ressort prédéfinie dans la direction (450) du premier outil d'insertion (140), l'élément d'actionnement (244) sollicité par l'élément de ressort (242) avec la force de ressort prédéfinie présentant un élément de support de type collet (245) qui s'applique dans la position de verrouillage contre les élargissements radiaux (247, 248, 249) de l'élément de retenue (246).

2. Machine-outil à main selon la revendication 1, **caractérisée en ce qu'**un élargissement axial (220) est prévu au niveau du logement d'outil (150), au niveau duquel peut être fixé un organe de retenue déformable élastiquement (230) pour retenir le deuxième outil d'insertion (510).

3. Machine-outil à main selon la revendication 2, **caractérisée en ce que** l'élargissement axial (220) présente un évidement extérieur en forme de rainure (330) pour la fixation de l'organe de retenue (230), l'élargissement axial (220) et/ou l'évidement extérieur en forme de rainure (330) étant réalisés sous forme annulaire.

4. Machine-outil à main selon la revendication 2 ou 3, **caractérisée en ce que** l'organe de retenue (230) présente un élément de ressort (334) et un élément de retenue (234) sollicité radialement par celui-ci avec une force de ressort prédéfinie.

5. Machine-outil à main selon la revendication 4, **caractérisée en ce que** l'élément de ressort (334) présente un joint torique réalisé en matériau caoutchouteux élastique et l'élément de retenue (234) présente un collier en C réalisé en métal.

6. Machine-outil à main selon l'une quelconque des revendications 2 à 5, **caractérisée en ce que** l'organe de retenue (230) est réalisé de manière à s'engager dans un évidement intérieur en forme de rainure (575) du deuxième outil d'insertion (510) prévu au niveau de l'accouplement à profil intérieur polygonal (514) du deuxième outil d'insertion (510).

7. Machine-outil à main selon l'une quelconque des revendications 2 à 6, **caractérisée en ce que** le logement d'outil (150) et l'élargissement axial (220) sont réalisés d'une seule pièce.

8. Logement d'outil (150) qui présente un logement intérieur à profil polygonal (290) et un logement extérieur à profil polygonal (210), le logement intérieur à profil polygonal (290) étant réalisé pour la connexion à un premier outil d'insertion (140) qui peut être verrouillé avec un dispositif de verrouillage (240) associé au logement d'outil (150) dans le logement intérieur à profil polygonal (290) et le logement extérieur à profil polygonal (210) étant réalisé pour la connexion à un deuxième outil d'insertion (510) qui présente un accouplement à profil polygonal intérieur (514) pouvant être enfoncé sur le logement extérieur à profil polygonal (210), **caractérisé en ce que** le dispositif de verrouillage (240) présente un élément d'actionnement (244) qui peut être déplacé, pour déverrouiller le premier outil d'insertion (140), dans une direction axiale (510) détournée du premier outil d'insertion (140), d'une position de verrouillage dans une position de déverrouillage, le dispositif de verrouillage (240) présentant un élément de retenue (246) qui est réalisé pour bloquer l'élément d'actionnement (244) dans la position de verrouillage pendant le fonctionnement de la machine-outil à main (100), l'élément de retenue (246) étant réalisé à la manière d'un collier en C qui présente des élargissements radiaux (247, 248, 249) pour bloquer l'élément d'actionnement (244), et le dispositif de verrouillage (240) présentant un élément de ressort (242) qui est réalisé pour solliciter l'élément d'actionnement (244) dans la position de verrouillage avec une force de ressort prédéfinie dans la direction (450) du premier outil d'insertion (140), l'élément d'actionnement (244) sollicité par l'élément de ressort (242) avec la force de ressort prédéfinie présentant un élément de support de type collet (245) qui s'applique dans la position de verrouillage contre les élargissements radiaux (247, 248, 249) de l'élément de retenue (246).
